**Europäisches Patentamt**

**European Patent Office**

**Office européen des brevets**

(19)

(11) Veröffentlichungsnummer : **0 158 623**
**B1**

(12) **EUROPÄISCHE PATENTSCHRIFT**

(45) Veröffentlichungstag der Patentschrift :
27.07.88

(51) Int. Cl.⁴ : **F 16 F   1/18,** B 29 C 67/14

(21) Anmeldenummer : 85890053.3

(22) Anmeldetag : 01.03.85

(54) Verfahren zum Herstellen einer Blattfeder aus faserverstärktem Kunststoff.

(30) Priorität : 02.03.84 AT 711/84
25.10.84 AT 3417/84

(43) Veröffentlichungstag der Anmeldung :
16.10.85 Patentblatt 85/42

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
EP-A- 0 106 249
DE-B- 1 231 967
GB-A- 2 100 835
US-A- 2 980 158
US-A- 3 057 767
US-A- 3 900 357
US-A- 4 414 049
THE MOTOR BOAT & YACHTING, Band 89, September
1956 Seite 382

(73) Patentinhaber : ISOSPORT VERBUNDBAUTEILE
Ges.m.b.H.
Industriestrasse 2
A-7000 Eisenstadt (AT)

(72) Erfinder : Woltron, Herbert
Babenbergerstrasse 7/12
A-2340 Mödling (AT)

(74) Vertreter : Stampfer, Heinz
ISOVOLTA Österreichische Isolierstoffwerke AG
Industriezentrum-Süd
A-2351 Wiener Neudorf (AT)

EP 0 158 623 B1

## Beschreibung

Die Erfindung betrifft ein Verfahren zum Herstellen einer Blattfeder aus faserverstärktem Kunststoff mit einer über ihre Länge variablen Dicke, bei dem ein gegebenenfalls mit einer härtbaren Kunststoffmasse imprägnierter oder beaufschlagter und hochfeste Fasern, wie Glasfasern und/oder Kohlenstoffasern, enthaltender Endlosstrang auf einem mindestens zwei Aufnahmeelemente aufweisenden, rotierenden Aufnahmekörper aufgewickelt wird, wonach der Wickel in eine Form eingebracht und in dieser mit der in ihm enthaltenden und/oder gemeinsam mit ihm in diese Form eingebrachten Kunststoffmasse zu einem Blattfeder-Rohling verfestigt und gegebenenfalls ausgehärtet wird.

Ein Verfahren der obengenannten Art zur Herstellung einer Blattfeder aus faserverstärktem Kunststoff ist nun aus der GB-A-21 00 835 bekannt. Die nach diesem Verfahren hergestellte Blattfeder hat zwar an der Federmitte eine größere Dicke als an den Federenden ; die Federbreite ist aber an den Federenden größer als an der Federmitte und zwar so, daß die Größe der Federquerschnittfläche über die Federlänge praktisch konstant bleibt. Bei der Federnherstellung wird nun nur der zwischen den zwei Aufnahmeelementen des Aufnahmekörpers aufgespannte Teil des Federmaterial-Wickels in die Form eingebracht, während die Aufnahmeelemente mit den um sie geschlungenen Wickelteilen außerhalb der Form verbleiben.

Der Erfindung liegt nun die Aufgabe zugrunde, ein einfach auszuführendes Verfahren der eingangs genannten Art zur Herstellung einer Blattfeder insbesondere von sogenannten « Parabelfedern » anzugeben, die eine über die Federlänge variable Dicke und variable Querschnitts-Größe aufweist, wobei die Federbreite konstant bleiben kann.

Diese Aufgabe wird in dem erfindungsgemäßen Verfahren gelöst, das gemäß Anspruch 1 dadurch gekennzeichnet ist, daß — zur Herstellung einer Blattfeder mit über ihre Länge variablen Dicke und variable Querschnitts-Größe — vor dem Aufwickeln des gegebenenfalls mit einer härtbaren Kunststoffmasse imprägnierten oder beaufschlagten Endlosstranges in mehreren Lagen zu einem Endlosbandwickel auf den Endlosstrang Zwischenlagenstücke aufgebracht werden, die sich im Endlosbandwickel zwischen benachbarten übereinanderliegenden Endlosstrang-Lagen anordnen, wonach der Endlosbandwickel — gegebenenfalls zusammen mit anderen zum Aufbau der Blattfeder dienenden Komponenten — derart in die Form eingebracht wird, daß er längs im wesentlichen seinem gesamten Umfang an der zylindermantelförmigen Begrenzungsfläche des Formraumes anliegt und daß gegebenenfalls danach die im Formraum zwischen den Verstärkungsfasern noch bestehenden Hohlräume durch Einbringen einer härtbaren Kunststoffmasse ausgefüllt werden, wonach die Verfestigung bzw.

Aushärtung zum Blattfeder-Rohling erfolgt.

Aus der US-A-4 414 049 und der US-A-2 980 158 sind nun zwar Verfahren zur Herstellung einer Blattfeder bzw. eines blattfederartigen Körpers aus faserverstärkten Kunststoffen bekannt, deren Querschnitts-Größen über die Federlänge variabel sind, doch gehen diese Verfahren andere Wege als das erfindungsgemäße Verfahren :

Gemäß der US-A-4 414 049 wird für die Herstellung einer Blattfeder mit einer härtbaren Kunststoffmasse imprägnierte Faserstränge derart auf einen Aufnahmekörper mit mehreren Aufnahmeelementen aufgewickelt, daß die Faserstränge jeweils nacheinander um unterschiedliche Aufnahmeelemente geschlungen werden. Es ergeben sich dabei mehrere Stellen einer Richtungsänderung des verstärkenden Fasermaterials, welche dann in der fertigen Blattfeder ungewünschte Inhomogenitäten des Federmaterials darstellen. Die US-A-2 980 158 beschreibt ein Verfahren zum Herstellen eines Bogens zum Bogenschießen aus faserverstärktem Kunststoff. Hier wird die größere Dicke in der Bogenmitte dadurch erzielt, daß man an der entsprechenden Stelle des Wickels in diesem ein Paket aus Verstärkungsmaterial einlegt und den Wickel samt dem Verstärkungsmaterial in der Form aushärtet. Dieses Verfahren erfordert aber relativ viel Handarbeit und ist wenig flexibel.

Die Erfindung wird ferner durch die Ansprüche 2-12 gekennzeichnet, die vorteilhafte Ausgestaltungen der erfindungsgemäßen Verfahren betreffen.

Im folgenden wird die Erfindung anhand der Zeichnungen und mehreren Ausführungswegen näher erläutert.

Fig. 1 zeigt schematisch im Aufriß eine Anlage zur Herstellung eines unausgehärteten Endlosbandwickels, aus dem in weiterer Folge die Kunststoff-Blattfeder hergestellt wird.

Die Figuren 2 bzw. 3 und 4 zeigen den bereits aus Fig. 1 ersichtlichen Aufnahmekörper in zwei verschiedenen Phasen des Herstellungsverfahrens und zwar in Fig. 2 im Aufriß bzw. in Fig. 3 im Schnitt längs der Linie III-III in Fig. 4 und in Fig. 4 den Aufnahmekörper in der Aufsicht.

Fig. 5 zeigt das Wickelschema eines Endlosbandwickels.

Fig. 6 zeigt die beiden Formhälften einer Preßform mit dem in die Preßform einzubringenden vom Aufnahmekörper aufgenommenen Endlosbandwickel.

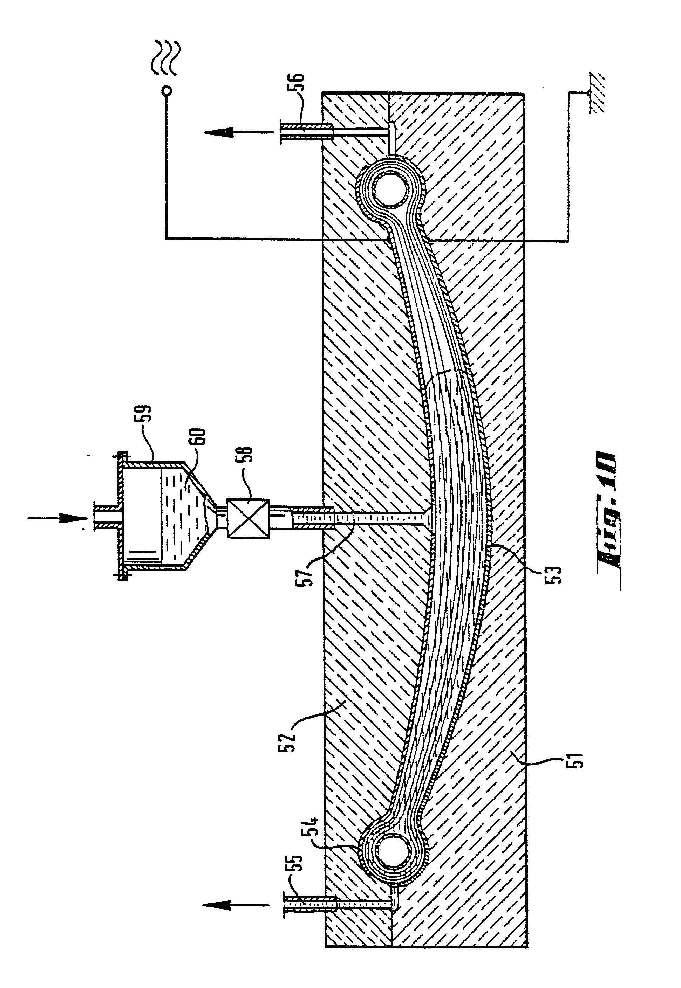

Fig. 7 zeigt einen Querschnitt durch die geschlossene Form längs der Linie VII-VII in Fig. 6, Fig. 8 in einer Teildarstellung einen Schnitt durch die Preßform im Bereich des Federauges 49 längs der Linie VIII-VIII in Fig. 7.

In Fig. 9 ist der erzeugte Blattfederkörper schematisch dargestellt.

Fig. 10 zeigt die bei einer Verfahrensvariante verwendete Form in schematischer Darstellung.

Das erfindungsgemäße Verfahren sei nachstehend zunächst für das Herstellen einer Kunststoff-Blattfeder beschrieben, bei der an beiden Enden Federaugen im Federkörper mit integriert sind.

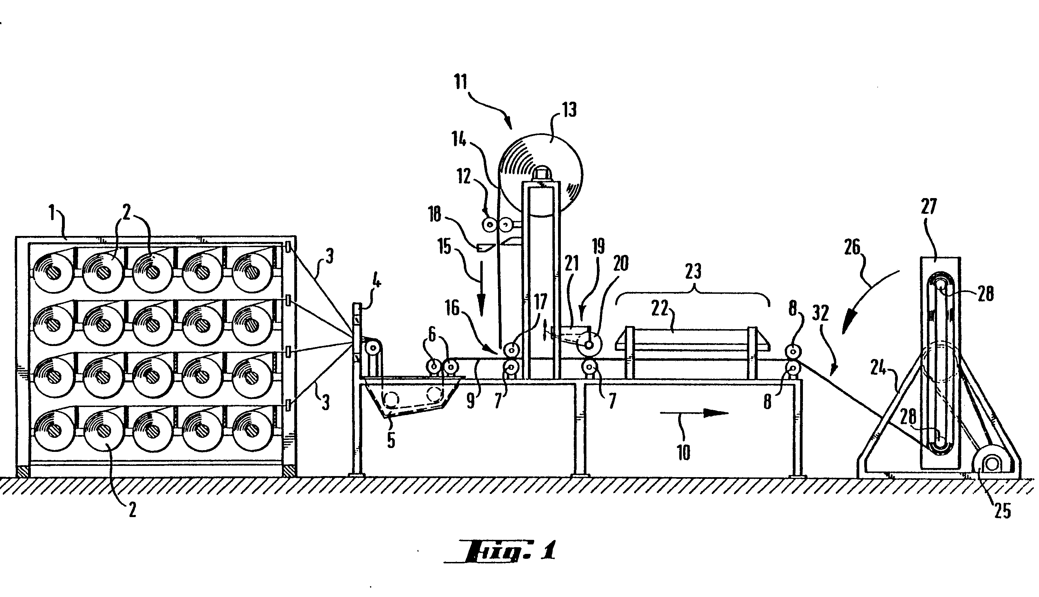

Für die Herstellung dieses Endlosbandwickels (siehe Fig. 1) werden von in einem Rollenstuhl 1 angeordneten Rollen 2 Glasfaserrovingstränge 3 abgezogen, die nach Passieren eines Kardiergitters 4 eine Imprägnierwanne 5 durchlaufen, in welcher sie mit einer aushärtbaren Kunststoffmasse, die z. B. vorteilhaft aus einem Epoxydharz auf Basis von Bisphenol A und einem cycloaliphatischen diaminischen Härter bestehen kann, imprägniert werden. Der so erzeugte Strang wird in einem Abquetschwalzenpaar 6 kalibriert und wird — geführt durch die Rollen 7 und 8 — als Endlosstrang 9 in Richtung des Pfeiles 10 abgezogen. Dabei durchläuft dieser Endlosstrang 9 zunächst eine Ablegestation 11, in welcher mittels der Abzugsvorrichtung 12 von einer Vorratsrolle 13 ein Glasgewebeband 14 in Richtung des Pfeiles 15 abgezogen werden kann, mit dem Ziel, Glasgewebestücke mit unterschiedlichen Längen auf bestimmte Stellen des Endlosstranges 9 abzulegen. Dieser Ablegevorgang funktioniert nun wie folgt.

Vor dem jeweiligen Einschalten der Abzugsvorrichtung 12 reicht der Anfang des Glasgewebebandes 14 nach unten hängend an der Stelle 16 bis knapp über den in Richtung des Pfeiles 10 transportierten Endlosstrang 9. Nach dem Einschalten der Abzugsvorrichtung 12 bewegt sich der Glasgewebeband-Anfang nach unten und stößt gegen den Endlosstrang 9, wird von diesem mitgenommen und mit Hilfe der Umlenkrolle 17 nun auf den noch nassen Endlosstrang 9 aufgelegt. Mit Hilfe der in der Ablegestation 11 integrierten Schlagschere 18 wird schließlich das aufzulegende Glasgewebestück in der gewünschten Länge abgeschnitten und die Abzugsvorrichtung 12 gestoppt, wenn der neu abgeschnittene Anfang der Glasgewebebahn sich wieder wie ursprünglich knapp über dem bewegten Endlossstrang 9 befindet.

Zum Beaufschlagen der auf den Endlosstrang 9 aufgelegten Glasgewebestücke mit einem Kunststoffgemisch dient eine in Förderrichtung 10 der Auflegestation 11 nachgeschaltete Beschichtungsvorrichtung 19 mit einer Beschichtungswalze 20 und einem Vorratsbehälter 21. Während des Passierens des aufgelegten Glasgewebestückes wird diese Beschichtungsvorrichtung 19 auf das sich mit dem Endlosstrang 9 bewegende Glasgewebestück abgesenkt und das Glasgewebestück mit einem Auftrag aus demselben Kunststoffgemisch versehen, wie es zum Imprägnieren der Glasfaserrovingstränge 3 verwendet wurde.

Der so mit Glasgewebestücken belegte und an diesen noch zusätzlich mit Kunstharz beschichtete Endlosstrang 9 passiert nun eine mit einer Infrarotheizung 22 versehene Vorwärmzone 23 in welcher die Temperatur des Endlosstranges 9 erhöht und damit die Viskosität des in ihm enthaltenen Kunststoffgemisches verringert wird, was bewirkt, daß das aufgebrachte Kunststoffgemisch in die Glasgewebestücke rasch eindringt.

Zur Formung des Endlosbandwickels dient ein in einem Wikkelbock 24 drehbar gelagerter und durch einen Motor 25 mit Untersetzungsgetriebe im Sinne des Pfeiles 26 in langsamer Rotation gehaltener, balkenförmiger Aufnahmekörper 27, an dem jeweils im gleichen Abstand von der Drehachse zwei Aufnahmeelemente 28 lösbar befestigt sind.

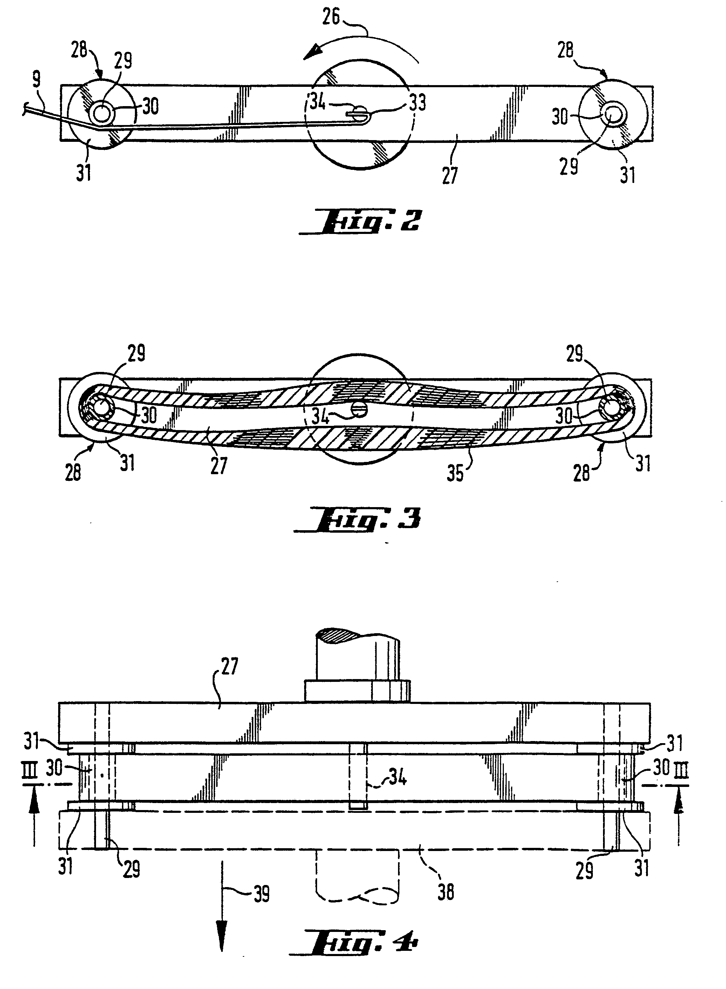

Die Formung des Endlosbandwickels sei nun im Zusammenhang mit Fig. 1 anhand der Figuren 2 bis 4 näher erläutert.

Die Aufnahmeelemente 28 bestehen jeweils aus einem Bolzen 29, auf dem eine Hülse 30 aus glasfaserverstärktem Kunststoff aufgeschoben ist. Zu beiden Seiten der Hülse 30 sind auf dem Bolzen in abnehmbarer Weise Scheiben 31 aus elektrisch isolierendem Material befestigt. Der bei 32 (Fig. 1) abgezogene, mit den aufgelegten Glasfaserstücken versehene Endlosstrang 9 wird nun mit seinem freien Ende 33 (Fig. 2) an einer am Aufnahmekörper 27 vorgesehenen Klemmvorrichtung 34 befestigt und danach durch Rotation des Aufnahmekörpers 27 im Sinne des Pfeiles 26 in mehreren Lagen um die Hülsen 30 der beiden Aufnahmeelemente 28 geschlungen. Danach wird der zugeführte Endlosstrang 9 abgeschnitten und das Strang-Ende 33 aus der Klemmvorrichtung 34 gelöst. Beide noch etwas klebrigen freien Naßstrang-Enden werden dann an die Oberfläche des so gebildeten Endlosbandwickels 35 angelegt, der nun die in Fig. 3 gezeigte Form hat.

Fig. 5 zeigt das Wickelschema des Endlosbandwickels 35 mit dem um die Aufnahmeelemente 28 in mehreren Lagen 36 gewikkelten, eine Kunststoffmasse und Glasfaserrovings enthaltenden Endlosstrang 9 und mit den ebenfalls mit einer Kunststoffmasse beaufschlagten Glasgewebestücken, die sich beim Aufwickeln als Zwischenlagenstücke 37 zwischen benachbarten übereinanderliegenden Endlosstrang-Lagen 36 anordnen.

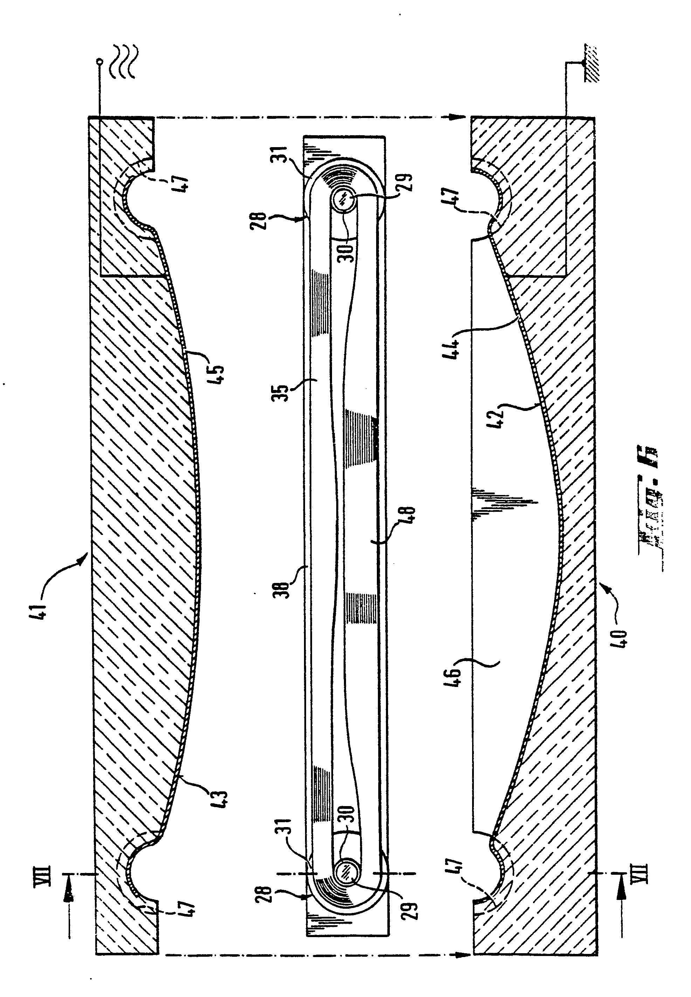

Der nun von den beiden Aufnahmeelementen 28 aufgespannte Endlosbandwickel 35 wird in weiterer Folge des Verfahrens in diesem aufgespannten Zustand gemeinsam mit den Aufnahmeelementen 28 in eine Preßform eingebracht. Dazu wird zunächst ein in Fig. 4 mit strichlierten Linien schematisch angedeuteter Transferbalken 38 an die Aufnahmeelemente 28 angekoppelt, die Befestigung der Aufnahmeelemente 28 mit dem Aufnahmekörper 27 gelöst und die nun mit dem Transferbalken 38 verbundenen Aufnahmeelemente 28 mit dem auf ihnen aufgespannten Endlosbandwickel 35 in Richtung des Pfeiles 39 vom Aufnahmekörper 27 abgezogen.

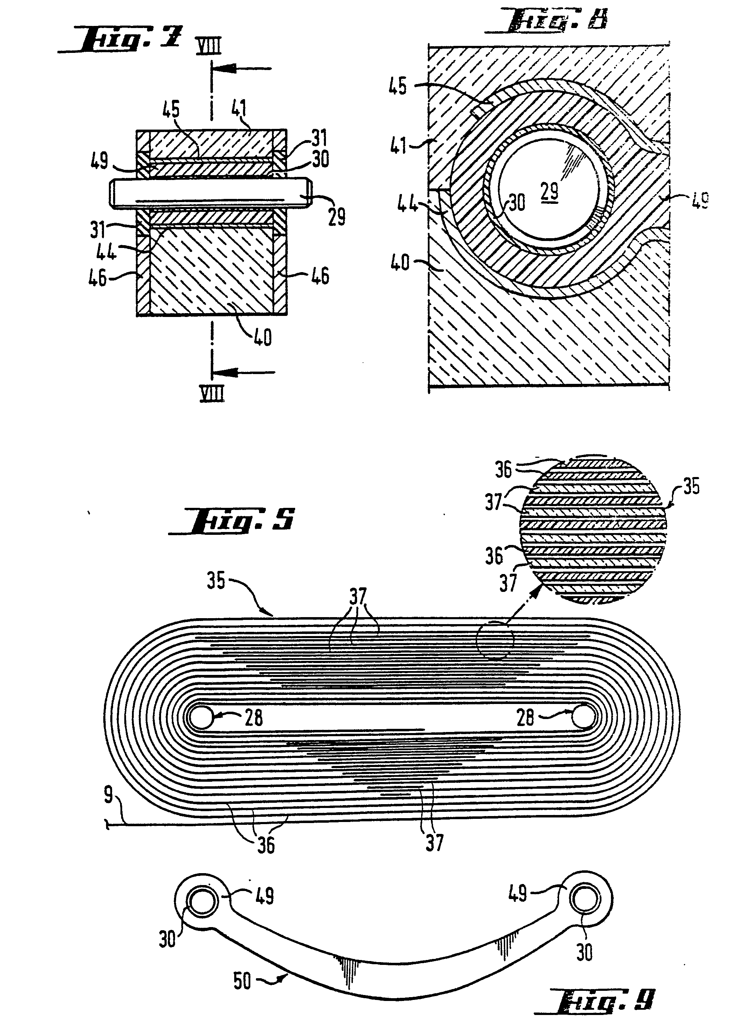

Die beiden Formhälften 40, 41 einer Preßform (Fig. 6), bestehen jeweils vorteilhaft aus einem elektrisch isolierenden Material und sind über nahezu ihre gesamten Preßflächen 42, 43 mit elektrisch leitenden Belägen 44, 45, z. B. aus Aluminiumblech, versehen. Zwischen diesen Formhälften 40, 41 wird nun mittels des Transferbalkens 38 der auf den Aufnahmeelementen 28 aufgespannte Endlosbandwickel 35 eingebracht. Der Transferbalken 38 wird nun abgesenkt und der Endlosbandwickel 35 dabei zwischen die Seitenwangen 46 der unteren Formhälfte 40 eingebracht, bis die Scheiben 31 der Aufnahmeelemente 28 in entsprechende halbkreisförmige Ausnehmungen 47 einrasten und sich der untere Strang 48 des Endlosbandwickels 35 nun über der Preßfläche 42 der unteren Formhälfte 40 befindet. Danach wird die Form durch Absenken der oberen Formhälfte 41 geschlossen (Fig. 7).

Nach Abkoppeln des Transferbalkens 38 von den Aufnahmeelementen 28 wird die Form nun in eine Presse verbracht, in der die Formhälften gegeneinander gepreßt werden. Die elektrisch leitenden Beläge 44, 45 werden dann mit dem Ausgang eines HF-Generators verbunden, wonach man die HF-Spannung einschaltet. Das Kunststoffmaterial des Preßgutes nimmt in dem HF-Feld Verlustwärme auf, wodurch das Preßgut rasch erwärmt wird und in wenigen Minuten aushärtet. Das ausgehärtete Preßgut bildet nun einen in Fig. 9 schematisch dargestellten Blattfederkörper 50 in dem an den Federaugen 49 die beiden Hülsen 30 integriert sind und der nach Öffnung der Preßform und Entfernung der Bolzen 29 und der Scheiben 31, welche letztere ja einen Teil der Formanordnung bilden, noch heiß entnommen wird.

Bei einem konkreten Verfahrensbeispiel werden zur Erzeugung eines solchen Blattfederkörpers 50 mit einem Federaugenabstand von 1 500 mm, einer Federbreite von 60 mm einer Dicke in der Federmitte von 33 mm und an den Federenden von 20 mm für den Endlosbandwickel fünfzehn Glasfaserrovings von jeweils 2 400 tex und ein Glasfasergewebeband mit 800 g/m² Flächengewicht eingesetzt. Der Glasfasergehalt im Federkörper beträgt insgesamt etwa 70 Gew. %.

In einer vorteilhaften Variante des erfindungsgemäßen Verfahrens kann in der Anlage zur Herstellung des unausgehärteten Endlosbandwickels 35 (Fig. 1) zwischen den Rollen 8 und dem Wickelbock 24 noch ein Tunnelofen eingeschaltet werden, der von dem mit Zwischenlagenstücken 37 belegten Endlosstrang 9 durchlaufen wird, wobei das in diesem enthaltene duromere Kunstharz vorgehärtet wird, so daß der Endlosstrang 9 mit den Zwischenlagenstücken 37 nun als weitgehend trockenes Material auf den Aufnahmekörper 28 aufgewickelt wird, was die spätere Manipulation des Endlosbandwickels 35 erleichtert.

Wird das erfindungsgemäße Verfahren zur Herstellung einer Blattfeder verwendet werden, die an einem oder beiden Enden kein Federauge aufweisen soll, so ist das vorstehend beschriebene Verfahren zur Herstellung eines Blattfeder-Rohlings gedacht, von dem dann die nicht gewünschten Augenbereiche durch Sägeschnitte abgetrennt werden.

Nachstehend sei nun eine weitere Verfahrensvariante beschrieben, bei der die Glasfaserverstärkung in Form eines Endlosbandwickels hergestellt wird, der nur in einem geringen Ausmaß mit einer Kunststoffmasse imprägniert oder beaufschlagt ist. Dieser Endlosbandwickel wird dann in eine Form eingebracht, wobei die Fasern des Endlosbandwickels den Formraum möglichst gleichmäßig ausfüllen sollen. Danach werden die im Formraum zwischen den Verstärkungsfasern noch bestehenden Hohlräume durch Einbringen einer Kunststoffmasse ausgefüllt und anschließend die in der Form befindliche Kunststoffmasse ausgehärtet.

Auch bei dieser Verfahrensvariante kann die in Fig. 1 gezeigte Anlage benutzt werden. Dabei wird als Endlosstrang ein genähtes Glasfasergelegeband eingesetzt, das direkt der Ablegestation 11 zugeführt wird, in welcher es — so wie im Zusammenhang — mit der ersten Verfahrensvariante beschrieben — mit Glasgewebestücken belegt wird, die bei der Herstellung des Endlosbandwickels dann als Zwischenlagenstüke 37 dienen. Das so mit Glasgewebestücken belegte Glasfasergelegeband wird nun mit Hilfe der Beschichtungsvorrichtung 19 mit einem geringen Auftrag einer härtbaren Kunststoffmasse versehen. Diese Kunststoffmasse, die z. B. vorteilhaft aus einem Epoxydharz auf Basis von Bisphenol A mit einem cycloaliphatischen diaminischen Härter bestehen kann, dringt nun beim Passieren der Vorwärmezone 23 in das Fasermaterial ein und fixiert wegen seiner Klebrigkeit die Glasfasergewebestücke auf dem Glasfasergelegeband. Die Herstellung des Endlosbandwickels und sein Einbringen in eine Form erfolgt dann in analoger Weise wie anhand der ersten Verfahrensvariante beschrieben.

Die Formhälften 51, 52, (Fig. 10) deren Preßflächen ähnlich wie bei der Form gemäß Fig. 6, elektrisch leitende Beläge 53, 54 aufweisen, sind mit dem Ausgang eines HF-Generators verbunden. Im Gegensatz zu der Form nach Fig. 6 sind die Formhälften 51, 52 hier bei geschlossener Form so gegeneinander abgedichtet, daß der Formraum mit Hilfe einer Pumpe über zwei an den Formenden in der oberen Formhälfte 52 angebrachten Entlüftungskanäle 55, 56 evakuiert werden kann. Die obere Formhälfte 52 weist ferner in der Formmitte einen Einspeisekanal 57 auf, der über ein Ventil 58 mit einer Einspeisevorrichtung 59 für den flüssigen Kunststoff 60 verbunden ist.

Nach dem Einbringen des Endlosbandwickels in die Form wird der Formraum über die Entlüftungskanäle 55, 56 evakuiert und der HF-Generator eingeschaltet. Danach wird das Ventil 58 geöffnet, wodurch der in der Einspeisevorrichtung 59 vorbereitete flüssige Kunststoff 60, der ebenfalls aus einem Epoxydharz auf Basis von Bisphenol A mit einem cycloaliphatischen diaminischen Härter bestehen kann, über den Einspeisekanal 57 unter erhöhtem Druck in den Formraum eingepreßt wird, wo er die zwischen den Verstärkungsfasern noch bestehenden Hohlräume ausfüllt.

In Fig. 10 ist auf der rechten Hälfte der Schnittdarstellung der Formraum erst halb mit Kunststoff gefüllt dargestellt, während die linke Hälfte von Fig. 10 den Formraum nach Abschluß des Füllvorganges zeigt. Da die Füllung des Formraumes von der Formmitte ausgehend im wesentlichen parallel zur Federlängserstreckung in Richtung auf die Federenden zu fortschreitet und da die Verstärkungsfasern zum größten Teil ebenfalls parallel zur Federlängserstreckung verlaufen, kann eine beim Füllvorgang durch die fließende Kunststoffmasse eventuell bewirkte Verdrängung der Glasfasern weitgehend vermieden werden.

Nach Abschluß des Füllvorganges wird das Ventil 58 geschlossen und es wird bei weiter eingeschaltetem HF-Generator wegen der durch das elektromagnetische Hochfrequenzfeld in der Kunststoffmasse erzeugten dielektrischen Verlustwärme die in der Form enthaltene Kunststoffmasse beschleunigt ausgehärtet. Danach wird die Form geöffnet und der ausgehärtete Blattfederkörper noch heiß entnommen.

**Patentansprüche**

1. Verfahren zum Herstellen einer Blattfeder aus faserverstärktem Kunststoff mit einer über ihre Länge variablen Dicke, bei dem ein gegebenenfalls mit einer härtbaren Kunststoffmasse imprägnierter oder beaufschlagter und hochfeste Fasern wie Glasfasern und/oder Kohlenstofffasern enthaltender Endlosstrang (9) auf einem mindestens zwei Aufnahmeelemente (28) aufweisenden, rotierenden Aufnahmekörper (27) aufgewickelt wird, wonach der Wickel in eine Form eingebracht und in dieser mit der im Wickel enthaltenen und/oder gemeinsam mit in diese Form eingebrachten Kunststoffmasse zu einem Blattfeder-Rohling verfestigt und gegebenenfalls ausgehärtet wird, dadurch gekennzeichnet, daß — zur Herstellung einer Blattfeder mit über ihre Länge variablen Dicke und variablen Querschnitts-Größe — vor dem Aufwickeln des gegebenenfalls mit einer härtbaren Kunststoffmasse imprägnierten oder beaufschlagten Endlosstranges (9) in mehreren Lagen (36) zu einem Endlosbandwickel (35) auf den Endlosstrang (9) Zwischenlagenstücke (37) aufgebracht werden, die sich im Endlosbandwickel (35) zwischen benachbarten übereinanderliegenden Endlosstrang-Lagen (36) anordnen, wonach der Endlosbandwickel (35) — gegebenenfalls zusammen mit anderen zum Aufbau der Blattfeder dienenden Komponenten — derart in die Form eingebracht wird, daß er längs im wesentlichen seinem gesamten Umfang an der zylindermantelförmigen Begrenzungsfläche des Formraumes anliegt und daß gegebenenfalls danach die im Formraum zwischen den Verstärkungsfasern noch bestehenden Hohlräume durch Einbringen einer härtbaren Kunststoffmasse ausgefüllt werden, wonach die Verfestigung bzw. Aushärtung zum Blattfeder-Rohling erfolgt.

2. Verfahren nach Anspruch 1, dadurch gekennzeichnet, daß die Zwischenlagenstücke (37) aus einem faserigen flächigen Material bestehen, das gegebenenfalls mit einer härtbaren Kunststoffmasse beaufschlagt oder imprägniert wurde.

3. Verfahren nach Anspruch 2, dadurch gekennzeichnet, daß die Zwischenlagenstücke (37) nach ihrem Aufbringen auf den Endlosstrang (9) mit einer Kunststoffmasse beaufschlagt werden.

4. Verfahren nach Anspruch 2 oder 3, dadurch gekennzeichnet, daß das Material der Zwischenlagenstücke (37) zumindest zum Teil aus einem Fasergewebe besteht.

5. Verfahren nach einem der Ansprüche 1 bis 4, dadurch gekennzeichnet, daß zur Herstellung einer Blattfeder, in welcher an den Federenden Federaugen (49) mit integriert sind, der Endlosbandwickel (35) derart in die Form eingebracht wird, daß er dabei an den Federenden jeweils eine zylindrische Aussparung für die Federaugen (49) umschließt.

6. Verfahren nach Anspruch 5, dadurch gekennzeichnet, daß gemeinsam mit dem Endlosbandwickel (35) Hülsen (30) als Federaugenbuchsen in die Form eingebracht werden.

7. Verfahren nach Anspruch 6, dadurch gekennzeichnet, daß diese Hülsen (30) bei der Herstellung des Endlosbandwickels (35) jeweils einen Teil der Aufnahmeelemente (28) des Aufnahemkörpers (17) bilden.

8. Verfahren nach einem der Ansprüche 1 bis 7, dadurch gekennzeichnet, daß das im Endlosstrang (9) und gegebenenfalls in den Zwischenlagenstücken (37) enthaltene Kunstharz noch vor dem Aufwickeln auf den Aufnahmekörper (27) vorgehärtet wird.

9. Verfahren nach einem der Ansprüche 1 bis 8, dadurch gekennzeichnet, daß in dem Federmaterial zur Förderung der Härtung des in ihm enthaltenen duromeren Kunststoffes durch ein elektromagnetisches Hochfrequenzfeld dielektrische Verlustwärme erzeugt wird.

10. Verfahren nach Anspruch 9, dadurch gekennzeichnet, daß die Härtung des Federmaterials in einer Form erfolgt, die noch zusätzlich beheizt wird.

11. Verfahren nach einem der Ansprüche 1 bis 10, dadurch gekennzeichnet, daß für das Einbringen einer Kunststoffmasse in die zwischen den Verstärkungsfasern noch verbleibenden Hohlräume der Formraum evakuiert wird und daß das Einbringen der flüssigen, gegebenenfalls duromeren Kunststoffmasse danach unter erhöhtem Drucke erfolgt.

12. Verfahren nach Anspruch 11, dadurch gekennzeichnet, daß das Einbringen der flüssigen Kunststoffmasse in den Formraum über eine oder mehrere in der Formraummitte angeordnete Einspeisestellen (57) erfolgt.

**Claims**

1. Process for producing a leaf spring made of fibre-reinforced plastic with a thickness variable over its length, in which a continuous web (9) optionally impregnated or loaded with a hardenable plastic material and containing high-strength fibres such as glass fibres and/or carbon fibres, is wound on to a rotating take-up device (27) having at least two take-up elements (28), whereafter the wound material is placed in a mould and is compacted therein into a leaf spring blank with the plastic material contained in the wound material and/or placed together in this mould and is optionally cured, characterised in that, in order to produce a leaf spring with a thickness variable over its length and a variable size of cross-section, before winding up the continuous web (9), optionally impregnated or loaded with a hardenable plastic material, in several layers (36) onto a continuous reel (35), intermediate layer pieces (37) are applied on to the continuous web (9) which arrange themselves in the continuous reel (35) between adjacent superimposed continuous web layers (36), whereafter the continuous reel (35) — optionally together with other components serving to form the leaf spring — is placed in the mould in such a way that it adjoins the cylindrical-shaped periphery of the mould chamber essentially along its whole extent, and that optionally thereafter spaces still present in the mould chamber between the reinforcing fibres are filled by introducing a hardenable plastic material, whereafter the compacting or curing into leaf spring blanks occurs.

2. Process according to Claim 1, characterised in that the intermediate layer pieces (37) consist of a fibrous sheet material which has optionally been loaded or impregnated with a hardenable plastic material.

3. Process according to Claim 2, characterised in that the intermediate layer pieces (37) are loaded with a plastic material after they have been applied to the continuous web (9).

4. Process according to Claim 2 or 3, characterised in that the material of the intermediate layer pieces (37) consists at least in part of a fibrous material.

5. Process according to one of Claims 1 to 4, characterised in that in order to produce a leaf spring in which spring eyes (49) are integrated at the spring ends, the continuous reel (35) is placed in the mould in such a way that in doing so it surrounds a cylindrical recess for the spring eyes (49) at each of the spring ends.

6. Process according to Claim 5, characterised in that together with the continuous reel (35) sleeves (30) are placed in the mould as spring eye bushings.

7. Process according to Claim 6, characterised in that in production of the continuous reel (35), said sleeves (30) form a part of each of the take-up elements (28) of the take-up device (27).

8. Process according to one of Claims 1 to 7, characterised in that the synthetic resin contained in the continuous web (9) and optionally in the intermediate layer pieces (37) is pre-cured prior to being wound on to the take-up device (27).

9. Process according to one of Claims 1 to 8, characterised in that dielectric heat loss is produced by a high frequency electromagnetic field in the spring material in order to promote hardening of the duromeric plastic contained therein.

10. Process according to Claim 9, characterised in that the hardening of the spring material takes place in a mould which is additionally heated.

11. Process according to one of Claims 1 to 10, characterised in that the mould chamber is evacuated to introduce a plastic material into the spaces still remaining between the reinforcement fibres and that the introduction of the liquid, optionally duromeric plastic material occurs thereafter under increased pressure.

12. Process according to Claim 11, characterised in that the introduction of the liquid plastic material into the mould chamber occurs via one or more feed-in points (57) arranged in the centre of the mould chamber.

## Revendications

1. Procédé de fabrication d'un ressort à lames en matière plastique renforcée par des fibres et présentant dans le sens de la longueur une épaisseur variable, dans lequel un écheveau continu (9) imprégné ou enduit le cas échéant d'une masse de matière plastique durcissable et contenant des fibres à haute résistance telles que des fibres de verre et/ou des fibres de carbone est bobiné sur un corps de réception rotatif (27) présentant au moins deux éléments de réception (28), à la suite de quoi le rouleau est introduit dans une forme où il est consolidé et le cas échéant durci avec la masse de matière plastique contenue dans le rouleau et/ou introduite conjointement dans cette forme pour constituer une ébauche de ressort à lames, caractérisé en ce que — pour la fabrication d'un ressort à lames présentant dans le sens de la longueur une épaisseur et des dimensions transversales variables avant l'enroulement en plusieurs couches (36) de l'écheveau continu (9) imprégné ou enduit le cas échéant d'une masse de matière plastique durcissable pour former un rouleau en bande sans fin (35), on interpose des pièces intercalaires (37), qui se disposent dans le rouleau en bande continue (35) entre des couches voisines (36) d'écheveau continu reposant les unes sur les autres, à la suite de quoi le rouleau en bande continue (35) — le cas échéant conjointement avec d'autres composants servant à la réalisation du ressort à lames — est introduit dans la forme, de telle manière qu'il s'appuie longitudinalement sensiblement sur toute son étendue sur la surface délimitant l'intérieur de la forme constituant une enveloppe cylindrique et que, le cas échéant, les emplacements restant encore vides entre les fibres de renforcement dans l'espace de la forme soient ensuite remplis par introduction d'une masse de matière plastique durcissable, à la suite de quoi se réalise la consolidation ou le durcissement pour constituer une ébauche de ressort à lames.

2. Procédé selon la revendication 1, caractérisé en ce que les pièces intercalaires (37) se composent d'un matériau fibreux en nappe qui, le cas échéant, a été enduit ou imprégné d'une masse de matière plastique durcissable.

3. Procédé selon la revendication 2, caractérisé en ce que les pièces intercalaires (37) sont enduites d'une masse de matière plastique après leur introduction sur l'écheveau continu (9).

4. Procédé selon la revendication 2 ou 3, caractérisé en ce que le matériau des pièces intercalaires (37) se compose au moins en partie d'un tissu fibreux.

5. Procédé selon l'une des revendications 1 à 4, caractérisé en ce que pour la fabrication d'un ressort à lames dans lequel sont intégrés des œillets de ressorts (49) aux extrémités du ressort, le rouleau en bande continue (35) est introduit dans la forme de telle sorte qu'aux extrémités du ressort il entoure dans chaque cas un évidement cylindrique pour les œillets de ressort (49).

6. Procédé selon la revendication 5, caractérisé en ce que l'on introduit dans la forme conjointement avec le rouleau en bande continue (35) des manchons (30) constituant les douilles des œillets de ressort..

7. Procédé selon la revendication 6, caractérisé en ce que ces manchons (30) constituent chacun une partie des éléments de réception (28) du corps de réception (17) lors de la fabrication du rouleau en bande continue (35).

8. Procédé selon l'une des revendications 1 à 7, caractérisé en ce que la résine synthétique contenue dans l'écheveau continu (9) et le cas échéant dans les pièces intercalaires (37) subit un durcissement préalable avant l'enroulement sur le corps de réception (27).

9. Procédé selon l'une des revendications 1 à 8, caractérisé en ce qu'on produit un échauffement par pertes diélectriques à l'aide d'un champ électromagnétique à haute fréquence dans le matériau du ressort pour réaliser le durcissement de la matière plastique thermodurcissable qui y est contenue.

10. Procédé selon la revendication 9, caractérisé en ce que la forme dans laquelle on réalise le durcissement du matériau de ressort est, en outre, chauffée.

11. Procédé selon l'une des revendications 1 à 10, caractérisé en ce que, pour l'introduction d'une masse de matière plastique dans les emplacements restant vides entre les fibres de renforcement, on met la forme sous vide et en ce qu'on réalise ensuite l'introduction de la masse de matière plastique liquide, le cas échéant thermodurcissable en surpression.

12. Procédé selon la revendication 11, caractérisé en ce que l'on introduit la masse de matière plastique liquide dans l'espace de la forme par un ou plusieurs points d'alimentation (57) disposés dans le milieu de l'espace de la forme.

Fig. 1

0 158 623

**Fig: 2**

**Fig: 3**

**Fig: 4**

_Fig. 6_

0 158 623

Fig. 7

Fig. 8

Fig. 5

Fig. 9

_Fig. 10_

0 158 623